# FASCICULE DE BREVET EUROPEEN

(11) **EP 3 246 151 B1**
(45) Date de publication et mention de la délivrance du brevet: **01.07.2020**
(21) Numéro de dépôt: 17167748.7
(22) Date de dépôt: 24.04.2017
(51) Int. Cl.: B29C 64/393, B29C 64/10, A46B 5/04, A46B 9/02

(54) **DISPOSITIF ET PROCÉDÉ D'IMPRESSION EN TROIS DIMENSIONS D'UN MANCHON DESTINÉ À RECEVOIR UN APPLICATEUR COSMÉTIQUE**
VORRICHTUNG UND VERFAHREN ZUR 3D-BEDRUCKUNG EINER MANSCHETTE ZUR AUFNAHME EINES KOSMETIK-APPLIKATORS
DEVICE AND METHOD FOR THREE-DIMENSIONAL PRINTING OF A SLEEVE INTENDED FOR RECEIVING A COSMETIC APPLICATOR

(30) Priorité: 18.05.2016 FR 1654411
(43) Date de publication de la demande: 22.11.2017
(73) Titulaire: Albéa Services, 92230 Gennevilliers (FR)
(72) Inventeur: MOURARET, Guillaume, 75017 PARIS (FR); LUSCAN, François, 95210 SAINT GRATIEN (FR)
(74) Mandataire: Gevers & Orès

(56) Documents cités:
- WO-A1-2015/132734
- WO-A2-2013/149697
- FR-A1- 2 846 534

## Description

L'invention concerne un procédé d'impression en trois dimensions d'un manchon destiné à recevoir un applicateur cosmétique.

Il est connu de prévoir des manchons creux destinés à recevoir un doigt d'un utilisateur, d'une part, et à porter un applicateur cosmétique d'autre part. Ces manchons standards permettent à l'utilisateur de se maquiller à l'aide de l'applicateur en glissant directement le manchon sur un de ses doigts.

Il est connu, aussi, de tenter de rendre ces manchons universels permettant leur utilisation, indifféremment avec des doigts de petit ou de gros diamètres. Cependant, le confort d'utilisation de tels manchons est rarement satisfaisant. Le document FR2846534 décrit de tels manchons. Le document WO2013/149697 A2 décrit un procédé d'impression en trois dimensions d'un outil médical adapté aux doigts de l'utilisateur.

Un des objectifs de l'invention consiste à proposer un procédé d'impression en trois dimension de manchons destinés à recevoir un applicateur cosmétique, chaque manchon étant adapté à la morphologie particulière d'un utilisateur donné.

Ainsi, l'invention concerne un procédé d'impression en trois dimensions selon la revendication 1, mettant avantageusement en œuvre un dispositif d'impression en trois dimensions d'un manchon destiné à recevoir un applicateur cosmétique, ledit dispositif comprenant une imprimante pour imprimer en trois dimensions, ladite imprimante étant configurée pour recevoir un fichier numérique, d'une part, et pour imprimer ledit manchon, d'autre part,

Selon le procédé de l'invention, ledit dispositif comprend, en outre, un calculateur apte à adapter les dimensions du manchon à imprimer avec celles d'un doigt d'un utilisateur.

Le dispositif du procédé de l'invention utilise une technologie d'impression en trois dimensions. Cette technologie permet d'obtenir des objets personnalisés. Elle est d'application particulièrement intéressante pour les objets de petites tailles, comme par exemple un manchon destiné à recevoir un applicateur cosmétique.

Ainsi, il est avantageusement prévu, au sein du dispositif du procédé de l'invention, de prévoir un calculateur conçu pour faire correspondre les dimensions du manchon à imprimer avec celles d'un doigt d'un utilisateur donné. Autrement dit, chaque manchon est adapté à la morphologie particulière d'un utilisateur.

Cela présente l'avantage de proposer un manchon confortable que l'utilisateur pourra utiliser, en le glissant sur son doigt, avec facilité, pour se maquiller à l'aide de l'applicateur cosmétique reçu sur ledit manchon.

Selon différents modes de réalisation du procédé de l'invention, qui pourront être pris ensemble ou séparément :
- le dispositif d'impression comprend, en outre, un moyen conçu pour capturer les dimensions du doigt de l'utilisateur, dit moyen de capture d'images,
- ledit moyen de capture d'images est une caméra intégrée à un appareil de téléphonie nomade,
- ledit moyen de capture d'images est un scanner intégré à une borne interactive,

Selon l'invention le procédé d'impression en trois dimensions d'un manchon destiné à recevoir un applicateur cosmétique, comprend :
- une étape de réception des dimensions d'un doigt d'un utilisateur,
- une étape de calcul pour adapter les dimensions du manchon à imprimer au doigt de l'utilisateur,
- une étape d'impression en trois dimensions dudit manchon à l'aide d'un dispositif d'impression en trois dimensions.

Selon différents modes de réalisation de l'invention, qui pourront être pris ensemble ou séparément :
- le procédé d'impression de l'invention comprend, en outre, une étape selon laquelle l'utilisateur informe le dispositif d'impression de la forme extérieure du manchon à imprimer,
- le procédé d'impression de l'invention comprend, en outre, une étape selon laquelle l'utilisateur informe le dispositif d'impression de la nature de l'applicateur cosmétique à imprimer,
- le procédé d'impression de l'invention comprend, en outre, une étape de reconnaissance visuelle des dimensions du doigt de l'utilisateur.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence au dessin schématique annexé :

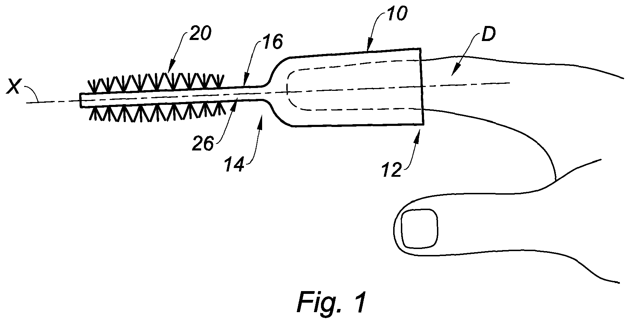

- la figure 1 est une représentation schématique d'un exemple de réalisation d'un manchon obtenu avec un dispositif du procédé de l'invention, et/ou selon les étapes du procédé de l'invention.

L'invention concerne un procédé d'impression en trois dimensions mettant avantageusement en œuvre un dispositif d'impression en trois dimensions d'un manchon 10 destiné à recevoir un applicateur cosmétique 20 (voir figure 1).

Par « manchon », on entend un adaptateur creux, configuré pour envelopper un doigt. Autrement dit, un manchon obtenu selon le procédé de l'invention est une pièce borgne qui est prévue pour être enfilée sur un doigt. Ici, ledit manchon 10 présente une direction d'extension longitudinale principale, dite direction principale qui est référencée X sur la figure 1. Le manchon 10 présente une extrémité proximale 12, par laquelle l'utilisateur introduit son doigt. Le doigt est repéré D sur la figure 1. Le manchon 10 présente, de plus, une extrémité distale 14, opposée à ladite extrémité proximale 12 le long de ladite direction principale X.

Il est intéressant de noter qu'au voisinage de ladite extrémité distale 14, le manchon 10 comprend un siège 16 destiné à accueillir un applicateur cosmétique 20. Autrement dit, une zone siège 16 est prévue entre le manchon 10 et l'applicateur 20. Ainsi, l'applicateur 20 est directement issu de matière avec le manchon 10 et le siège 16. Ceci présente l'avantage d'obtenir un ensemble cosmétique prêt à l'emploi à l'aide du dispositif du procédé de l'invention, ceci rapidement.

Une variante , ne faisant pas partie de l invention : - applicateur cosmétique 20 amovible par rapport au manchon 10, plus particulièrement par rapport au siège 16 dudit manchon 10 - présente l'avantage de fournir un manchon 10 adapté au doigt de l'utilisateur, manchon qui peut ensuite être utilisé avec différents applicateurs cosmétiques 20. Pour ce faire, il pourra être prévu un siège 16 muni d'un taraudage interne, notamment pour y visser une tige 26 filetée d'applicateur cosmétique 20. Tout autre moyen d'assemblage entre une zone creuse - siège 16 - et une tige sensiblement lisse - tige de l'applicateur 20 - est envisageable ; par exemple un clipsage, un emmanchage à force, un coincement, ceci sans que cette liste ne soit limitative.

On entend par « applicateur cosmétique », un applicateur 20 réalisé sous la forme d'une brosse mascara, d'un applicateur de gloss pour les lèvres, d'une combinaison entre une brosse mascara et un applicateur destiné à souligner les traits des yeux d'un utilisateur, voire uniquement ledit dernier applicateur, ceci sans que cette liste ne soit limitative.

Le dispositif du procédé de l'invention comprend une imprimante pour imprimer en trois dimensions. Ladite imprimante sera configurée pour recevoir un fichier numérique, d'une part, et pour imprimer ledit manchon 10, d'autre part. Ladite imprimante sera avantageusement configurée pour imprimer l'applicateur 20 avec ledit manchon 10.

Selon le procédé de l'invention, ledit dispositif comprend, en outre, un calculateur apte à adapter les dimensions du manchon 10 avec celles du doigt D de l'utilisateur. Autrement dit, le calculateur calcule au plus juste les dimensions de l'espace destiné à recevoir le doigt D dans le manchon 10 afin que l'utilisateur puisse utiliser l'ensemble « manchon 10 et applicateur 20 » de manière confortable, sans gêne. Encore autrement dit, le jeu prévu entre le doigt D de l'utilisateur et le manchon 10, une fois celui-ci sur le doigt D de l'utilisateur, sera un jeu de l'ordre du millimètre, voire de l'ordre de quelques millimètres.

Ledit calculateur pourra avantageusement être un programme informatique commandé par une application installée sur un appareil de téléphonie nomade ou un programme informatique commandé par un logiciel installé sur une borne interactive.

L'avantage du dispositif du procédé de l'invention réside, entre autres, dans l'utilisation d'une imprimante pour imprimer en trois dimensions. Cela permet de prévoir des formes pour l'applicateur qui ne sont pas réalisables par des moyens de fabrication classiques et habituels tel que l'injection plastique.

Cela permet aussi de prévoir l'obtention du manchon 10 et/ou de l'applicateur 20 dans des matériaux rigides, semi-rigides, voire souples, ou encore l'utilisation de matériaux différents entre le manchon 10 et l'applicateur 20, ceci même si ces deux éléments sont solidaires entre eux, ou encore, issus de matières. En effet, l'impression en trois dimensions permet de réaliser des tranches d'une même pièce en un matériau différent du reste de cette pièce.

Ainsi, le manchon 10 et/ou le siège 16 pourront être prévus en un matériau plastique, rigide, tel que le polypropylène, le polyéréphtalate d'éthylène, le polyéréphtalate de butylène, l'acrylonitrile butadiène styrène, le polycyclohexylène dimethylene téréphtalate modifié acide, le polyéthylène ou le polyméthacrylate de méthyle.

L'applicateur 20, pourra être prévu, lui, en un matériau élastomère, relativement souple, tel que l'Hytrel (marque déposée), en un élastomère thermoplastique TPE ou TPU, voire en polyéthylène basse densité. L'applicateur 20 pourra donc être prévu, avantageusement, avec une souplesse comprise entre 55 et 70 Shore D.

D'autre part, bien que la forme de l'espace destiné à recevoir le doigt D dans le manchon 10 - ou espace interne - soit dictée par la forme du doigt D de l'utilisateur, la forme extérieure du même manchon 10 pourra, elle, présenter toute section propre à satisfaire les besoins esthétiques relatifs à ce type de produit. Ainsi, l'extérieur du manchon 10 pourra être de section polygonale, triangulaire, hexagonale, ovale, ceci sans que cette liste ne soit limitative ; l'extérieur du manchon 10 pourra aussi être gravé, floqué, ou encore présenter des zones en reliefs.

Le dispositif d'impression comprendra avantageusement un moyen conçu pour capturer les dimensions du doigt D de l'utilisateur, dit moyen de capture d'images. Ledit moyen de capture d'images, non illustré ici, pourra être, par exemple, une caméra intégrée à un appareil de téléphonie nomade (une pico-caméra dans ce cas) ou un scanner intégré à une borne interactive.

Selon l'invention, le procédé d'impression en trois dimensions d'un manchon 10 tel que celui qui vient d'être décrit, comprend :
- une étape de réception des dimensions d'un doigt D d'un utilisateur,
- une étape de calcul pour adapter les dimensions du manchon 10 à imprimer, au doigt D de l'utilisateur,
- une étape d'impression en trois dimensions dudit manchon 10 à l'aide d'un dispositif d'impression en trois dimensions.

Le procédé d'impression de l'invention comprendra, avantageusement, une étape selon laquelle l'utilisateur informe le dispositif d'impression de la forme extérieure du manchon 10 à imprimer, par exemple en choisissant dans une base de données disponible à distance ou directement au sein d'une borne interactive devant laquelle se trouverait l'utilisateur.

Le procédé d'impression de l'invention comprendra, en outre, une étape de reconnaissance visuelle des dimensions du doigt de l'utilisateur, en particulier avant de lancer le calcul de l'espace à prévoir pour recevoir ledit doigt à l'intérieur du manchon 10.

Le procédé d'impression de l'invention comprendra, avantageusement, aussi, une étape selon laquelle l'utilisateur informe le dispositif d'impression de la nature de l'applicateur cosmétique à imprimer, par exemple encore, en choisissant dans une base de données disponible à distance ou directement au sein d'une borne interactive devant laquelle se trouverait l'utilisateur.

Il est à noter également que des variantes de réalisation sont bien sûr possibles. Notamment il est aussi envisageable, dans des exemples de réalisation supplémentaires, que le moyen de capture d'images du dispositif du procédé de l'invention puisse faire correspondre un visage, ou les détails d'un visage (yeux, lèvres, cils) à un applicateur 20 donné. En effet, il est envisageable de préenregistrer, dans une base de données accessible à distance, ou directement au sein de la borne interactive devant laquelle se trouverait l'utilisateur, des correspondances entre applicateurs cosmétique 20 et certains traits de visage. Cette étape permettrait, alors, d'apporter à l'utilisateur un conseil et/ou une aide à la décision pour directement adapter l'applicateur à l'utilisation qui sera faite de l'ensemble « manchon 10 et applicateur 20 », à savoir le maquillage d'une partie définie de son visage.

## Revendications

1. Procédé d'impression en trois dimensions d'un manchon (10) destiné à recevoir un applicateur cosmétique (20), comprenant :
a) une étape de réception des dimensions d'un doigt (D) d'un utilisateur,
b) une étape de calcul pour adapter les dimensions du manchon (10) à imprimer au doigt (D) de l'utilisateur,
c) une étape d'impression en trois dimensions dudit manchon (10) à l'aide d'un dispositif d'impression en trois dimensions,
ledit manchon (10) présentant une direction d'extension longitudinale principale, dite direction principale (X), une extrémité proximale (12), par laquelle l'utilisateur introduit son doigt (D), et une extrémité distale (14), opposée à ladite extrémité proximale (12) le long de ladite direction principale (X), au voisinage de laquelle le manchon (10) comprend un siège (16) destiné à accueillir ledit applicateur cosmétique (20), ledit applicateur cosmétique (20) étant issu de matière avec ledit manchon (10),
ledit manchon (10) comportant un espace interne dicté par la forme du doigt (D) de l'utilisateur, les dimensions du manchon correspondant aux dimensions dudit doigt (D) de l'utilisateur, grâce à quoi chaque manchon (10) est adapté à la morphologie particulière de l'utilisateur.

2. Procédé d'impression selon la revendication précédente, comprenant en outre une étape selon laquelle l'utilisateur informe le dispositif d'impression de la forme extérieure du manchon (10) à imprimer.

3. Procédé d'impression selon l'une quelconque des revendications précédentes, comprenant en outre une étape selon laquelle l'utilisateur informe le dispositif d'impression de la nature de l'applicateur cosmétique (20) à imprimer.

4. Procédé d'impression selon l'une quelconque des revendications précédentes, comprenant en outre une étape de reconnaissance visuelle des dimensions du doigt (D) de l'utilisateur.

5. Procédé d'impression selon l'une quelconque des revendications précédentes, dans lequel le dispositif d'impression en trois dimensions comprenant une imprimante pour imprimer en trois dimensions, ladite imprimante étant configurée pour recevoir un fichier numérique, d'une part, et pour imprimer ledit manchon (10), d'autre part, ledit dispositif comprenant, en outre, un calculateur apte à adapter les dimensions du manchon (10) à imprimer avec celles du doigt (D) de l'utilisateur.

6. Procédé d'impression selon la revendication 4, dans lequel ledit dispositif comprend, en outre, un moyen conçu pour capturer les dimensions du doigt (D) de l'utilisateur, dit moyen de capture d'images.

7. Procédé d'impression selon la revendication précédente, dans lequel ledit moyen de capture d'images est une caméra intégrée à un appareil de téléphonie nomade.

8. Procédé d'impression selon la revendication 6, dans lequel ledit moyen de capture d'images est un scanner intégré à une borne interactive.

9. Procédé d'impression selon la revendication 6, dans lequel le moyen de capture d'images est conçu pour faire correspondre un visage ou des détails d'un visage de l'utilisateur audit applicateur.

## Patentansprüche

1. Verfahren zum dreidimensionalen Drucken einer Manschette (10), die dazu bestimmt ist, einen Kosmetikapplikator (20) aufzunehmen, das Folgendes umfasst:
a) einen Schritt des Aufnehmens der Maße eines Fingers (D) eines Benutzers,
b) einen Schritt des Berechnens zum Anpassen der Maße der zu druckenden Manschette (10) an den Finger (D) des Benutzers,
c) einen Schritt des dreidimensionalen Druckens der Manschette (10) mit Hilfe einer dreidimensionalen Druckvorrichtung,
wobei die Manschette (10) eine Längshauptausdehnungsrichtung, Hauptrichtung (X) genannt, ein proximales Ende (12), durch das der Benutzer seinen Finger (D) einführt, und ein distales Ende (14) aufweist, das dem proximalen Ende (12) entlang der Hauptrichtung (X) entgegengesetzt ist, in dessen Nähe die Manschette (10) einen Sitz (16) umfasst, der dazu bestimmt ist, den Kosmetikapplikator (20) zu empfangen, wobei der Kosmetikapplikator (20) aus einem Stück mit der Manschette (10) gefertigt ist,
wobei die Manschette (10) einen Innenraum umfasst, der von der Form des Fingers (D) des Benutzers festgelegt ist, wobei die Maße der Manschette den Maßen des Fingers (D) des Benutzers entsprechen, womit jede Manschette (10) an die besondere Morphologie des Benutzers angepasst wird.

2. Druckverfahren nach dem vorstehenden Anspruch, das weiter einen Schritt umfasst, bei dem der Benutzer die Druckvorrichtung über die äußere Form der zu druckenden Manschette (10) informiert.

3. Druckverfahren nach einem der vorstehenden Ansprüche, das weiter einen Schritt umfasst, bei dem der Benutzer die Druckvorrichtung über die Beschaffenheit des zu druckenden Kosmetikapplikators (20) informiert.

4. Druckverfahren nach einem der vorstehenden Ansprüche, das weiter einen Schritt des visuellen Erkennens der Maße des Fingers (D) des Benutzers umfasst.

5. Druckverfahren nach einem der vorstehenden Ansprüche, wobei die dreidimensionale Druckvorrichtung einen Drucker umfasst, um dreidimensional zu drucken, wobei der Drucker konfiguriert ist, um einerseits eine digitale Datei zu empfangen, und um andererseits die Manschette (10) zu drucken, wobei die Vorrichtung weiter einen Rechner umfasst, der dazu geeignet ist, die Maße der zu druckenden Manschette (10) an die des Fingers (D) des Benutzers anzupassen.

6. Druckverfahren nach Anspruch 4, wobei die Vorrichtung weiter ein Mittel umfasst, das konzipiert ist, um die Maße des Fingers (D) des Benutzers zu erfassen, das Mittel zum Erfassen von Bildern genannt wird.

7. Druckverfahren nach dem vorstehenden Anspruch, wobei das Mittel zum Erfassen von Bildern eine Kamera ist, die in ein Mobiltelefongerät integriert ist.

8. Druckverfahren nach Anspruch 6, wobei das Mittel zum Erfassen von Bildern ein Scanner ist, der in eine interaktive Dialogstation integriert ist.

9. Druckverfahren nach Anspruch 6, wobei das Mittel zum Erfassen von Bildern konzipiert ist, um ein Gesicht oder Einzelheiten eines Gesichts des Benutzers dem Applikator entsprechen zu lassen.

## Claims

1. Method for three-dimensionally printing a sleeve (10) intended to receive a cosmetic applicator (20), comprising:
a) a step of receiving dimensions of a finger (D) of a user,
b) a calculation step to adapt the dimensions of the sleeve (10) to be printed to the finger (D) of the user,
c) a step of three-dimensionally printing said sleeve (10) using a three-dimensional printing device,
said sleeve (10) having a main longitudinal extension direction, called main direction (X), a proximal end (12), by which the user introduces their finger (D), and a distal end (14), opposite said proximal end (12) along said main direction (X), in the vicinity of which the sleeve (10) comprises a seat (16) intended to receive said cosmetic applicator (20), said cosmetic applicator (20) being made in one piece with said sleeve (10),
said sleeve (10) comprising an inner space dictated by the shape of the finger (D) of the user, the dimensions of the sleeve corresponding to the dimensions of said finger (D) of the user, thanks to which each sleeve (10) is adapted to the particular morphology of the user.

2. Printing method according to the preceding claim, further comprising a step according to which the user informs the printing device of the outer shape of the sleeve (10) to be printed.

3. Printing method according to any one of the preceding claims, further comprising a step according to which the user informs the printing device of the nature of the cosmetic applicator (20) to be printed.

4. Printing method according to any one of the preceding claims, further comprising a step of visually recognising the dimensions of the finger (D) of the user.

5. Printing method according to any one of the preceding claims, wherein the three-dimensional printing device comprising a printer to print three-dimensionally, said printer being configured to receive a digital file, on the one hand, and to print said sleeve (10), on the other hand, said device further comprising a computer capable of adapting the dimensions of the sleeve (10) to be printed with those of the finger (D) of the user.

6. Printing method according to claim 4, wherien said device further comprises a means designed to capture the dimensions of the finger (D) of the user, called image capturing means.

7. Printing method according to the preceding claim, wherein said image capturing means is a camera integrated in a roaming telephony device.

8. Printing method according to claim 6, wherein said image capturing means is a scanner integrated in an interactive terminal.

9. Printing method according to claim 6, wherein the image capturing means is designed to make a face or details of a face of the user correspond to said applicator.
